# EUROPEAN PATENT SPECIFICATION

(11) **EP 2 854 036 B1**
(45) Date of publication and mention of the grant of the patent: **19.02.2020**
(21) Application number: 13806247.6
(22) Date of filing: 05.01.2013
(51) Int. Cl.: G06F 8/41

(54) **STORAGE SPACE MAPPING METHOD AND DEVICE**
LAGERRAUMABBILDUNGSVERFAHREN UND -VORRICHTUNG
PROCÉDÉ ET DISPOSITIF DE MAPPAGE D'ESPACE DE STOCKAGE

(30) Priority: 20.06.2012 CN 201210204676
(43) Date of publication of application: 01.04.2015
(73) Proprietor: Huawei Technologies Co., Ltd., Longgang District Shenzhen, Guangdong 518129 (CN)
(72) Inventor: ZHOU, Wei, Shenzhen Guangdong 518129 (CN)
(74) Representative: Goddar, Heinz J.
(86) International application number: PCT/CN2013/070055
(87) International publication number: WO 2013/189177

(56) References cited:
- WO-A1-2011/074569
- CN-A- 101 650 690
- CN-A- 101 944 067
- CN-A- 102 084 330
- CN-A- 102 230 374
- HEE SEO ET AL: "OpenMP Directive Extension for BlackFin 561 Dual Core Processor", COMPUTER AND INFORMATION TECHNOLOGY, 2006. CIT '06. THE SIXTH IEE E INTERNATIONAL CONFERENCE ON, IEEE, PI, 1 September 2006 (2006-09-01), pages 49-49, XP031021664, ISBN: 978-0-7695-2687-4
- JIANGZHOU HE ET AL: "OpenMDSP: Extending OpenMP to Program Multi-Core DSP", PARALLEL ARCHITECTURES AND COMPILATION TECHNIQUES (PACT), 2011 INTERNATIONAL CONFERENCE ON, IEEE, 10 October 2011 (2011-10-10), pages 288-297, XP032083337, DOI: 10.1109/PACT.2011.60 ISBN: 978-1-4577-1794-9
- ANDREA MARONGIU ET AL: "Efficient OpenMP data mapping for multicore platforms with vertically stacked memory", 2010 DESIGN, AUTOMATION & TEST IN EUROPE CONFERENCE & EXHIBITION : DATE 2010 ; DRESDEN, GERMANY, 8 - 12 MARCH 2010, IEEE, PISCATAWAY, NJ, US, 8 March 2010 (2010-03-08), pages 105-110, XP032318077, DOI: 10.1109/DATE.2010.5457227 ISBN: 978-1-4244-7054-9
- YING HU ET AL: "C/C++ conditional compilation analysis using symbolic execution", SOFTWARE ENGINEERING, 2000. PROCEEDINGS. INTERNATIONAL CONFERENCE ON OCTOBER 11-14, 2000, PISCATAWAY, NJ, USA,IEEE, 11 October 2000 (2000-10-11), pages 196-206, XP010522529, ISBN: 978-0-7695-0753-8

## Description

### TECHNICAL FIELD

The present invention relates to the field of computer technologies, and in particular, to a storage space mapping method and apparatus.

### BACKGROUND

A computer system has certain requirements for three basic performance indicators: a capacity, a speed, and a price of a storage. However, these three performance indicators are generally contradictory to each other, and a single storage formed by using only one type of technology cannot meet these three performance indicators at the same time. Therefore, in the prior art, by using a storage system formed by a multi-tier storage, several types of storage technology are combined to better resolve a contradiction among a large capacity, a high speed, and a low cost of a storage. For example, in current development of a digital signal processing (Digital Signal Processing, DSP) embedded chip, a multi-tier storage manner is generally used to deploy development code on memories at different tiers, so as to take full advantage of a memory at each tier in speed, capacity, and cost and achieve an optimal cost-performance ratio.

A current multi-tier storage manner is implemented in a manner of adding a section attribute to source code. Specifically, some sections are predefined. In source code written by a user, a section attribute is added in front of each variable and function separately, that is, a section is configured for each variable and function; a mapping relationship between each variable and function and the section is established, and a mapping relationship between the section and a specified memory is established by modifying a link script, so as to determine a storage location, in the memory, of each variable and function involved in the source code.

In a process of implementing the current multi-tier storage manner, configuration needs to be performed for each symbol (variable or function) separately, which is relatively complex. In addition, in a current embedded product, a set of source code generally has tens of thousands of symbols, which results in excessively heavy development workload and high maintenance costs.

H. Seo & S.W. Kim, "OpenMP Directive Extension for BlackFin 561 Dual Core Processor", Proceedings of the Sixth IEEE International Conference on Computer and Information Technology, p. 49-54 describe an extension of the OpenMP shared directive for performance optimization on BlackFin 561 dual core processors. Each core has its own private L1 cache, and there is a shared L2 cache. It is proposed that read and write shared variables are allocated in L2 SRAM, while private and read-only shared variables are allocated in L1 SRAM. More precisely, said article discloses the specification of pragma directives (e.g. pragmas such as specific sections in L2, "default", "modified") by the software developer in source files. Said pragmas may be inserted in front of a variable(s) and/or a function(s) within a source file. Said inserted directives specify that variable/function should be cached at L1 private cache or L2 shared cache, a compiler generating code which when executed will allocate, accordingly, variable or function specified with such directives to the L1 or L2 cache, fastening said code execution. In the article, any mapping of a variable to L1 or L2 memory space is dependent on manually inserting an according directive in the source code. The article teaches in particular that all shared variables and functions may be allocated in L2, or shared variables may be allocated in L2 and functions in L1, or only modified shared variables may be allocated in L2 and the remaining variables and functions in L1.

J. He et al., "OpenMDSP: Extending OpenMP to Program Multi-Core DSP", 2011 IEEE International Conference on Parallel Architectures and Compilation Techniques, p. 288-297 describes an extension of OpenMP for multi-core DSPs having on-chip core-local memory and non-cache-coherent shared memory. Data placement directives are proposed which allow programmers to control the placement of global variables.

A. Marongiu et al., "Efficient OpenMP Data Mapping for Multicore Platforms with Vertically Stacked Memory", 2010 IEEE Design, Automation & Test Europe Conference, p. 105-110 describes a programming framework with compiler support for placement of data across multiple vertical memory stacks of a 3D-stacked memory hierarchy.

Y. Hu et al., "C/C++ Conditional Compilation Analysis Using Symbolic Execution", Proceedings of the IEEE 2000 International Conference on Software Engineering, p. 196-206, describe symbolic execution of preprocessing directives for analysis of conditional compilation.

### SUMMARY

Embodiments of the present invention provide a storage space mapping method and apparatus, so as to overcome a defect in the prior art that a storage space mapping relationship needs to be separately configured for each variable or function in source code, thereby reducing complexity of implementing a multi-tier storage manner, and reducing development workload and maintenance costs.

According to one aspect, an embodiment of the present disclosure provides a storage space mapping method, as defined in claim 1.

According to another aspect, an embodiment of the present disclosure provides a storage space mapping apparatus, as defined in independent claim 6.

According to the storage space mapping method and apparatus in the embodiments of the present invention, source code is parsed, so as to acquire a homing relationship between each function and/or variable in the source code and a file or a folder, and according to a storage area identifier that is configured for the file or the folder, a mapping relationship between a function and a variable that belong to a corresponding file or folder and the storage area identifier is established. Therefore, separate configuration does not need to be separately performed for a great number of functions and variables in the source code; instead, configuration needs to be performed only for the file or the folder, and then all functions and variables can be automatically mapped to a specified storage area identifier, and further mapped to specified storage space, which reduces complexity of implementing a multi-tier storage manner, reduces development workload, makes it easy to modify, and reduces maintenance costs.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a storage space mapping method according to an embodiment of the present invention;
FIG. 2 is a schematic diagram of a storage structure of a multi-tier storage system;
FIG. 3 is an example of a project structure; and
FIG. 4 is a schematic structural diagram of a storage space mapping apparatus according to an embodiment of the present invention.

### DESCRIPTION OF EMBODIMENTS

The following clearly and completely describes the technical solutions in the embodiments of the present invention with reference to the accompanying drawings in the embodiments of the present invention.

### Embodiment 1

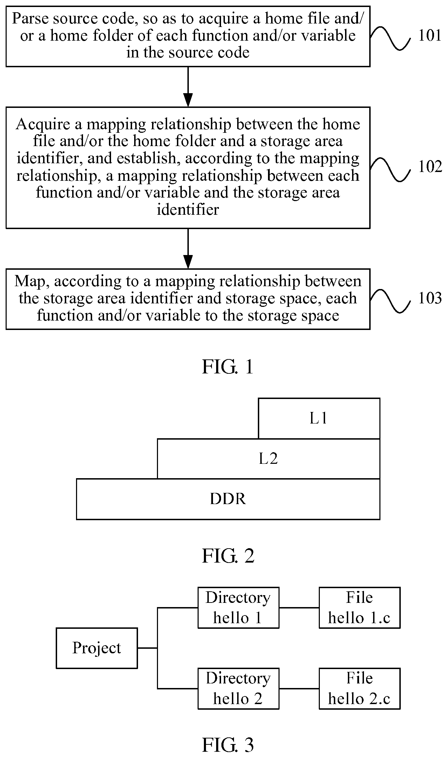

FIG. 1 is a schematic flowchart of a storage space mapping method according to an embodiment of the present invention. Specifically, as shown in FIG. 1, the storage space mapping method includes the following steps:
Step 101: Parse source code, so as to acquire a home file and/or a home folder of each function and/or variable in the source code.
Step 102: Acquire a mapping relationship between the home file and a storage area identifier and/or between the home folder and a storage area identifier, and establish, according to the mapping relationship, a mapping relationship between each function and/or variable and the storage area identifier.
Step 103: Map, according to a mapping relationship between the storage area identifier and storage space, each function and/or variable to the storage space.

Specifically, the storage space mapping method of this embodiment is described in detail by assuming an application scenario in which the storage space mapping method of this embodiment is used to map and store a project file to storage space of a multi-tier storage system. The application scenario is used only as an example of technical solutions of the present invention, instead of a limitation on the present invention. A person skilled in the art can understand that the technical solutions of the present invention are applicable to any scenario in which batch configuration needs to be performed on a function and a variable in a file or a folder, such as invoking of an inline function (inline).

FIG. 2 is a schematic diagram of a storage structure of a multi-tier storage system. As shown in FIG. 2, the multi-tier storage system includes, for example, L1 storage space, L2 storage space, and a double data rate synchronous dynamic random access memory (Double Data Rate Synchronous Dynamic Random Access Memory, DDR for short). FIG. 3 is an example of a project structure. As shown in FIG. 3, the project includes a directory (that is, a folder) hello 1 and a directory hello 2; a file hello 2. The following is described with reference to FIG. 2 and FIG. 3.

Firstly, some storage area identifiers are defined, and these storage area identifiers do not specify actual storage space in a storage area. For example, the storage area identifiers are defined in the following manner:
"#define L1_DATA_attribute_(section (".l1.data"))";
"#define L1_TEXT_attribute_(section (".l1.text"))";
"#define L2_DATA_attribute_(section (".l2.data"))";
"#define L2_ TEXT _attribute_(section (".l2.text"))";

By using the foregoing statements, four storage area identifiers "L1_DATA", "L1_TEXT", "L2_DATA", and "L2_TEXT" are defined, where "L1_DATA" is used to indicate storage space that is used to store a variable at an L1 layer, "L1_TEXT" is used to indicate storage space that is used to store a function at the L1 layer, "L2_DATA" is used to indicate storage space that is used to store a variable at an L2 layer, and "L2_TEXT" is used to indicate storage space that is used to store a function at the L2 layer.

Subsequently, a storage area identifier is configured at a file (or folder) level, that is, a storage area identifier is allocated to each file (or folder), and a mapping relationship between the file (or folder) and the storage area identifier is established. For example, "L1_DATA" and "L1_TEXT" are configured for the file hello 1.c, and "L2_DATA" and "L2_TEXT" are configured for the hello2.c.

Project source code written by a user is read, and by morphological and grammatical analysis, each function and variable in the source code, and a home file path of each function or variable (that is, a file or a folder to which each function or variable belongs) are acquired. For example, after the project source code is read, two source code files hello1.c and hello 2.c in the project source code are acquired, where the source code file hello1.c, for example, is:

```
        #include "hello.h"
        int a;
        int b;
        int funa ()
        {
        ...
        }
        int funb ()
        int funb ()
        {
        ...
        }
        funcint func ()
        {
        ...
        }
        and the source code file hello 2.c, for example, is:
        #include "hello.h"
        int x;
        int y;
        int funx ()
        {
        ...
        }
        int funy ()
        {
        ...
        }
        int funz ()
        {
        ...
        }
```

Afterwards, according to a storage area identifier corresponding to a file (folder) to which each function or variable belongs, a mapping relationship between each function or variable and the storage area identifier is established. With reference to the foregoing examples of the hello1.c and the hello 2.c, because a variable a, a variable b, a function funa(), a function funb(), and a function func() belong to the file hello1.c, the storage area identifier "L1_DATA" is configured for the variable a and the variable b, and the storage area identifier "L1_TEXT" is configured for the function funa(), the function funb(), and the function func(); because a variable x, a variable y, a function funx(), a function funy(), and a function funz() belong to the file hello2.c, the storage area identifier "L2_DATA" is configured for the variable x and the variable y, and the storage area identifier "L2_TEXT" is configured for the function funx(), the function funy(), and the function funz().

After mapping between the foregoing functions or variables and the storage area identifiers is complete, code, which identifies a mapping relationship between a function or a variable and a storage area identifier, of the hello 1.c is shown as follows:

```
        #include "hello.h"
        L1_DATA int a;
        L1_DATA int b;
        L1_TEXT int funa ()
        {
        ...
        }
        L1_TEXT int funb ()
        {
        ...
        }
        L1_TEXT int func ()
        {
        ...
        }
```

Code, which identifies a mapping relationship between a function or a variable and a storage area identifier, of the hello 2.c is shown as follows:

```
        #include "hello.h"
        L2_DATA int x;
        L2_DATA int y;
        L2_TEXT int funx ()
        {
        ...
        }
        L2_TEXT int funy ()
        {
        ...
        }
        L2_TEXT int funz ()
        {
        ...
        }
```

The foregoing code that identifies a mapping relationship between a function or a variable and a storage area identifier may be compiled into a file that can be redirected, and a mapping relationship between a storage area identifier and specified storage space is established by modifying a link script. Methods for compiling the file that can be redirected and modifying the link script are the same as those in the prior art; therefore, details are not described herein again. For example, the link script is modified as follows:

```
        .l1.text
        {
        .=ALIGN (16);
        *(.l1.text)
        .=ALIGN (16);
        }>L1TEXT_seg: L1TEXT_phdr
        .11.data:
        {
        .=ALIGN (16);
        *(.l1. data)
        .=ALIGN (16);
        }>L1DATA_seg: L1DATA_phdr
        .l2.text
        {
        .=ALIGN (16);
        *(.l2.text)
        .=ALIGN (16);
        }>L2TEXT_seg: L2TEXT_phdr
        .12.data:
        {
        .=ALIGN (16);
        *(.l2. data)
        .=ALIGN (16);
        }>L2DATA_seg: L2DATA_phdr
```

L1TEXT_seg, L1DATA_seg, L2TEXT_seg, and L2DATA_seg are the specified storage space.

An image file is generated by linking the file that can be redirected and the link script together. In this case, storage space of each variable and function in the project code is determined, where each variable and function in the project code are deployed in a multi-tier storage system. Mapping of each function and variable to the storage space may be mapping of the function and variable to a specific storage address in single-tier storage space, and may also be mapping of the function and variable to storage space at a certain tier in multi-tier storage space. A method for generating the image file is the same as that in the prior art; therefore, details are not described herein again. For example, the foregoing example is used to implement the following deployment: deploying the variable a and the variable b in the specified storage space L1DATA_seg; deploying the function funa(), the function funb(), and the function func() in the specified storage space L1TEXT_seg; deploying the variable x and the variable y in the specified storage space L2DATA_seg; and deploying the function funx(), the function funy(), and the function funz() in the specified storage space L2TEXT_seg.

According to the storage space mapping method in the foregoing embodiment, source code is parsed, so as to acquire a homing relationship between each function and/or variable in the source code and a file or a folder, and according to a storage area identifier that is configured for the file or the folder, a mapping relationship between a function and a variable that belong to a corresponding file or folder and the storage area identifier is established. Therefore, separate configuration does not need to be separately performed for a great number of functions and variables in the source code; instead, configuration needs to be performed only for the file or the folder, and then all functions and variables can be automatically mapped to a specified storage area identifier, and further mapped to specified storage space, which reduces complexity of implementing a multi-tier storage manner, reduces development workload, makes it easy to modify, and reduces maintenance costs.

### Embodiment 2

Based on the foregoing Embodiment 1, the acquiring a mapping relationship between the home file and a storage area identifier and/or between the home folder and a storage area identifier, and establishing, according to the mapping relationship, a mapping relationship between each function and/or variable and the storage area identifier specifically includes:
parsing a configuration file, and establishing the mapping relationship between each function and/or variable and the storage area identifier according to a pre-created configuration file and the home file and/or the home folder of each function and/or variable, where the configuration file includes the mapping relationship between the home file and/or the home folder and the storage area identifier.

Specifically, a configuration file is created, and a mapping relationship between a file (or a folder) and the storage area identifier is established and stored in the configuration file. A configuration granularity of the storage area identifier is above a file level, and each file (or folder) includes both a function and a variable; therefore, in the configuration file, the variable and the function in the file are separately configured.

For example, the following configuration file is created:

```
        " <file>
        <item name="./test/ hello1/hello1.c " CodeSection="L1_TEXT"
        TextSection="L1_DATA"/>
        <item name="./test/hello2/hello2.c" CodeSection="L2_TEXT"
        TextSection="L2_DATA"/>
        </file>"
```

<file> represents configuration at a file level. In the foregoing configuration file, a storage area identifier L1_DATA is configured for a variable in a file hello 1.c, a storage area identifier L1_TEXT is configured for a function in the file hello 1.c, a storage area identifier L2_DATA is configured for a variable in a file hello 2.c, and a storage area identifier L2_TEXT is configured for a function in the file hello 2.c. After the foregoing configuration file is created, when storage space mapping needs to be performed, the mapping relationship between the file (or the folder) and the storage area identifier is acquired by parsing the configuration file. With reference to a homing relationship, which is acquired by parsing source code, between a function and/or a variable and a file (or a folder), a mapping relationship between each function and/or variable and the storage area identifier can be established.

Further, the configuration file further includes: a mapping relationship between a specified function and/or variable in the home file and/or the home folder and a storage area identifier, where a storage area identifier corresponding to the specified function and/or variable is different from a storage area identifier corresponding to the home file and/or the home folder of the specified function and/or variable.

Correspondingly, the establishing the mapping relationship between each function and/or variable and the storage area identifier according to a pre-created configuration file and the home file and/or the home folder of each function and/or variable specifically includes:
establishing, according to the storage area identifier that is corresponding to the specified function and/or variable and is in the configuration file, the mapping relationship between the specified function and/or variable and the storage area identifier; and
establishing, according to the storage area identifier that is corresponding to the home file and/or the home folder and is in the configuration file, a mapping relationship between each of another function and/or variable and the storage area identifier, where each of the another function and/or variable is a function and/or a variable other than the specified function and/or variable in the home file and/or the home folder.

The specified function and/or variable may be any function and/or variable in the home file and/or the home folder. More specifically, configurations of different granularities may be performed in the configuration file. For example, for a directory (that is, a folder), a file, a function, and a variable, any two or more than two levels may be configured at the same time. When configuration of two or more than two levels exists, configuration of a smaller granularity has a higher priority.

For example, the following configuration file is created:

```
        " <folder>
        <item name="./test/hello1/" CodeSection= "L1_TEXT"
        TextSection="L1_DATA"/>
        </folder>
        <file>
        <item name="./test/hello2/hello2.c" CodeSection="L2_TEXT"
        TextSection="L2_DATA"/>
        </file>
        <var>
        <item name="b" Section="L2_DATA"/>
        </var>
        <func>
        <item name="funy" Section="L1_TEXT"/>
        </func>"
```

<folder> represents configuration at a directory (folder) level; <file> represents configuration at a file level; <var> represents configuration at a variable level; and <func> represents configuration at a function level. In the foregoing configuration file, the storage area identifier L1_DATA is configured for a variable in a directory hello 1, the storage area identifier L1_TEXT is configured for a function in the directory hello 1, the storage area identifier L2_DATA is configured for a variable in the file hello 2.c, the storage area identifier L2_TEXT is configured for a function in the file hello 2.c, the storage area identifier L2_DATA is configured for a variable b, and the storage area identifier L1_TEXT is configured for a function funy.

When a mapping relationship between a function and a variable and a storage area identifier is established according to the foregoing configuration file, mapping is performed, for example, in descending order of priority. Because configuration of a smaller granularity has a higher priority, configuration is performed first according to the specified variable b and function funy in the configuration file. That is, a mapping relationship between the variable b in the file hello 1.c and the storage area identifier L2_DATA is established, and a mapping relationship between the function funy in the file hello 2.c and the storage area identifier L1_TEXT is established. Subsequently, a mapping relationship between a corresponding function and variable and a storage area identifier is established according to file-level configuration in the configuration file; however, in this case, a mapping relationship of a variable and a function for which a mapping relationship has been established is not modified. With reference to the foregoing example, although the storage area identifier L2_TEXT is configured for a function in the hello 2.c, because in the configuration file, and the storage area identifier L1_TEXT is also configured for the function funy, although the function funy belongs to the file hello 2.c, the function funy is still mapped to the storage area identifier L1_TEXT, and another function other than the function funy in the file hello 2.c is mapped to the storage area identifier L2_TEXT.

Because the file hello 1.c is saved in the directory hello 1, the foregoing configuration for the directory hello 1 is equivalent to configuration for the file hello 1.c. That is, a variable in the file hello 1.c is mapped to the storage area identifier L1_DATA, and a function in the file hello 1.c is mapped to the storage area identifier L1_TEXT. In addition, if a file hello 3.c is also saved in the directory hello 1, and the file hello 3.c is not separately configured in the configuration file, the configuration for the file hello 1 is also applicable to the file hello 3.c; if the file hello 3.c is separately configured, a mapping relationship is established according to the separate configuration for the file hello 3.c, where the mapping relationship is between a function and a variable in the file hello 3.c, and a storage area identifier.

According to the storage space mapping method in the foregoing embodiment, storage area identifiers of different granularities are configured in a configuration file, so that mapping between a function and a variable and storage space is more flexible and diverse.

Further, creating the configuration file further includes:
setting a default storage area identifier in the configuration file; and
correspondingly, if, in the configuration file, the storage area identifier is configured for a part of the home file and/or the home folder, the establishing, according to the configuration file and the home file and/or the home folder of the function and/or variable, the mapping relationship between the function and/or the variable and the storage area identifier further includes:
   establishing a mapping relationship between a function and/or a variable in the source code and the default storage area identifier, where the function and/or the variable belong/belongs to a file and/or a folder to which a storage area identifier is not allocated.

For example, in the configuration file, the default storage area identifier is set in the following manner:

```
        <default>
        <item CodeSection="DDR_TEXT" TextSection="DDR_DATA"/>
        </default>
```

By using the foregoing configuration, a storage area identifier DDR_TEXT is set to a default storage area identifier of a function, and a storage area identifier DDR_DATA is set to a default storage area identifier of a variable. If the directory hello 2 shown in FIG. 3 also includes a file hello 4.c, because in the configuration file, only the storage area identifier corresponding to the file hello 2.c is configured, configuration is not performed for the directory hello 2, and a storage area identifier corresponding to the configuration file hello 4.c is not configured either, when the configuration file is parsed and a mapping relationship between each variable and function in the source code and the storage area identifier is established according to the configuration file, a mapping relationship between a function in the file hello 4.c and the storage area identifier DDR_TEXT is established, and a mapping relationship between a variable in the file hello 4.c and the storage area identifier DDR_DATA is established.

According to the storage space mapping method in the foregoing embodiment, a default storage area identifier is provided in a configuration file. On one hand, when there are a great number of files or folders for which a storage area identifier does not need to be specially specified, workload for separately allocating a storage area identifier to each file or folder can be effectively reduced; on the other hand, when mapping of a storage area identifier of a part of files or folders is not configured in the configuration file, successful mapping of a function and a variable can still be ensured.

### Embodiment 3

Based on the foregoing Embodiment 1, the acquiring a mapping relationship between the home file and a storage area identifier and/or between the home folder and a storage area identifier, and establishing, according to the mapping relationship, a mapping relationship between each function and/or variable and the storage area identifier specifically includes:
detecting whether the source code carries a first rule that is used to indicate the mapping relationship between the home file and/or the home folder and the storage area identifier; and
when the source code carries the first rule that is used to indicate the mapping relationship between the home file and/or the home folder and the storage area identifier, establishing the mapping relationship between each function and/or variable and the storage area identifier according to the mapping relationship between the home file and/or the home folder and the storage area identifier in the first rule.

Specifically, for file-level storage, a configuration file does not need to be created; instead, a first rule is directly added to the source code, where the first rule is used to indicate the mapping relationship between the home file and/or the home folder and the storage area identifier. More specifically, for example, if a keyword #pragma is used to indicate the first rule, a format of the first rule, for example, is "#pragma section <storage area identifier>".

For example, the file hello1.c is mapped to L1_DATA and L1_TEXT in the foregoing manner; then, code, in which the first rule is added, of the file hello1.c, for example, is:

```
        #include "hello.h"
        #pragma section
        <L1_TEXT>
        <L1_DATA>
        int a;
        int b;
        int funa ()
        {
        ...
        }
        int funb ()
        {
        ...
        }
        int func ()
        {
        ...
        }
```

In addition, the first rule of the foregoing code may also carry only any one of the storage area identifiers L1_DATA and L1_TEXT. For example, if the first rule is "#pragma section <L1_TEXT>", when the mapping relationship between the function and/or the variable and the storage area identifier is established, a fault tolerance function is performed by pre-configuration, and a function in the file hello1.c is mapped to the storage area identifier L1_TEXT, and a variable in the file hello1.c is mapped to the storage area identifier L1_DATA.

According to the storage space mapping method in this embodiment, a configuration file does not need to be established, and a storage area identifier can be configured for a file merely by adding an instruction to source code of the file, thereby further improving convenience and efficiency of storage space mapping.

Further, the acquiring a mapping relationship between the home file and a storage area identifier and/or between the home folder and a storage area identifier, and establishing, according to the mapping relationship between the home file and/or the home folder and the storage area identifier, a mapping relationship between the function and/or the variable and the storage area identifier further includes:
detecting, after the first rule is detected, whether the source code carries a second rule that is used to indicate a mapping relationship between a specified function and/or variable and a storage area identifier, where a storage area identifier corresponding to the specified function and/or variable in the second rule is different from a storage area identifier corresponding to the home file of the specified function and/or variable in the first rule; and
when the source code carries the second rule that is used to indicate a mapping relationship between a specified function and/or variable and a storage area identifier, establishing the mapping relationship between the specified function and/or variable and the storage area identifier according to the second rule, and establishing a mapping relationship between each of another function and/or variable and the storage area identifier according to the first rule, where each of the another function and/or variable is a function and/or a variable other than the specified function and/or variable in the home file.

Specifically, besides setting the foregoing first rule in the source code to specify a mapping relationship between a file and a storage area identifier, a storage area identifier may further be allocated to a function or a variable in the source code. An implementation manner of the second rule, for example, is the same as a manner of direct configuration for a function or a variable in the prior art; for example, a corresponding storage area identifier is directly added in front of a specified function or variable, and details are not described herein again. Correspondingly, in a process of establishing a mapping relationship between a function and/or a variable and a storage area identifier, if the second rule that allocates a storage area identifier to a specified function or variable exists, the mapping relationship between the specified function and/or variable and the storage area identifier is established according to the second rule; and for a function or a variable other than the specified function or variable in the file, a mapping relationship between the function or the variable and a storage area identifier is established according to the first rule.

According to the storage space mapping method in the foregoing embodiment, mapping between a function and a variable and storage space is more flexible and diverse.

### Embodiment 4

This embodiment provides an apparatus that is used to implement a storage space mapping method in the foregoing embodiments.

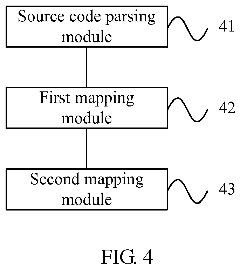

FIG. 4 is a schematic structural diagram of a storage space mapping apparatus according to an embodiment of the present invention. As shown in FIG. 4, the storage space mapping apparatus includes:
a source code parsing module 41, configured to parse source code, so as to acquire a home file and/or a home folder of each function and/or variable in the source code;
a first mapping module 42, configured to acquire a mapping relationship between the home file and a storage area identifier and/or between the home folder and a storage area identifier, and establish, according to the mapping relationship, a mapping relationship between each function and/or variable and the storage area identifier; and
a second mapping module 43, configured to map, according to a mapping relationship between the storage area identifier and storage space, each function and/or variable to the storage space.

A process of implementing storage space mapping by the storage space mapping apparatus in this embodiment is the same as the storage space mapping method in any of the foregoing embodiments; therefore, details are not described herein again.

According to the storage space mapping apparatus in this embodiment, source code is parsed, so as to acquire a homing relationship between each function and/or variable in the source code and a file or a folder, and according to a storage area identifier that is configured for the file or the folder, a mapping relationship between a function and a variable that belong to a corresponding file or folder and the storage area identifier is established. Therefore, separate configuration does not need to be separately performed for a great number of functions and variables in the source code; instead, configuration needs to be performed only for the file or the folder, and then all functions and variables can be automatically mapped to a specified storage area identifier, and further mapped to specified storage space, which reduces complexity of implementing a multi-tier storage manner, reduces development workload, makes it easy to modify, and reduces maintenance costs.

Further, the first mapping module includes:
a first mapping unit, configured to establish the mapping relationship between each function and/or variable and the storage area identifier according to a pre-created configuration file and the home file and/or the home folder of each function and/or variable, where the configuration file includes the mapping relationship between the home file and/or the home folder and the storage area identifier.

Further, the first mapping module further includes:
a configuration file creating unit, configured to create the configuration file and allocate the storage area identifier to the home file and/or the home folder in the configuration file.

Further, the configuration file further includes: a mapping relationship between a specified function and/or variable in the home file and/or the home folder and a storage area identifier, where a storage area identifier corresponding to the specified function and/or variable is different from a storage area identifier corresponding to the home file and/or the home folder of the specified function and/or variable; and
correspondingly, the first mapping unit is further specifically configured to: establish, according to the storage area identifier that is corresponding to the specified function and/or variable and is in the configuration file, the mapping relationship between the specified function and/or variable and the storage area identifier; and establish, according to the storage area identifier that is corresponding to the home file and/or the home folder and is in the configuration file, a mapping relationship between each of another function and/or variable and the storage area identifier, where each of the another function and/or variable is a function and/or a variable other than the specified function and/or variable in the home file and/or the home folder.

According to the storage space mapping apparatus in the foregoing embodiment, storage area identifiers of different granularities are configured in a configuration file that is created by a configuration file creating unit, so that mapping between a function and a variable and storage space is more flexible and diverse.

Further, the configuration file creating unit allocates, in the configuration file, the storage area identifier to a part of the home file and/or the home folder and sets, in the configuration file, a default storage area identifier; and
correspondingly, the first mapping unit is further configured to: establish a mapping relationship between a function and/or a variable in the source code and the default storage area identifier, where the function and/or the variable belong/belongs to a home file and/or a home folder to which a storage area identifier is not allocated.

According to the storage space mapping apparatus in the foregoing embodiment, a default storage area identifier is provided in a configuration file. On the one hand, when there are a great number of files or folders for which a storage area identifier does not need to be specially specified, workload for separately allocating a storage area identifier to each file or folder can be effectively reduced; on the other hand, when mapping of a storage area identifier of a part of files or folders is not configured in the configuration file, successful mapping of a function and a variable can still be ensured.

Further, the first mapping module includes:
a second mapping unit, configured to detect whether the source code carries a first rule that is used to indicate the mapping relationship between the home file and the storage area identifier, and when the source code carries the first rule that is used to indicate the mapping relationship between the home file and the storage area identifier, establish the mapping relationship between each function and/or variable and the storage area identifier according to the mapping relationship between the home file and the storage area identifier in the first rule.

According to the storage space mapping apparatus in the foregoing embodiment, a configuration file does not need to be created; instead, a storage area identifier can be configured for a file merely by adding an instruction to source code of the file, thereby further improving convenience and efficiency of storage space mapping.

Further, the second mapping unit is further configured to: detect, after the first rule is detected, whether the source code carries a second rule that is used to indicate a mapping relationship between a specified function and/or variable and a storage area identifier, where a storage area identifier corresponding to the specified function and/or variable in the second rule is different from a storage area identifier corresponding to the home file of the specified function and/or variable in the first rule; and when the source code carries the second rule that is used to indicate a mapping relationship between a specified function and/or variable and a storage area identifier, establish the mapping relationship between the specified function and/or variable and the storage area identifier according to the second rule, and establish a mapping relationship between each of another function and/or variable and the storage area identifier according to the first rule, where each of the another function and/or variable is a function and/or a variable other than the specified function and/or variable in the home file.

According to the storage space mapping apparatus in the foregoing embodiment, mapping between a function and a variable and storage space is more flexible and diverse.

Further, the second mapping module is specifically configured to map each function and/or variable to a storage address in single-tier storage space, or map each function and/or variable to storage space at a corresponding tier in multi-tier storage space.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

## Claims

1. A storage space mapping method, comprising:
defining storage area identifiers used to indicate storage space that is used to store a variable or a function at an L1 storage space or an L2 storage space;
configuring a storage area identifier at a file level, that is, allocating a storage area identifier to each file, and establishing a mapping relationship between the file and the storage area identifier;
parsing (101) source code, so as to acquire a home file of each function and/or variable in the source code, wherein project source code written by a user is read, and by morphological and grammatical analysis, each function and variable in the source code, and a home file path of each function or variable, that is, a file or a folder to which each function or variable belongs, are acquired, and wherein, after the project source code is read, at least two source code files in the project source code are acquired;
acquiring (102) the mapping relationship between the home file and the storage area identifier corresponding to the file to which each function or variable belongs, and establishing, according to the mapping relationship, a mapping relationship between each function and/or variable and the storage area identifier;
compiling code that identifies a mapping relationship between a function or a variable and a storage area identifier into a file that can be redirected, and establishing a mapping relationship between a storage area identifier and specified storage space by modifying a link script;
generating an image file by linking the file that can be redirected and the link script together, wherein in this case, storage space of each variable and function in the project code is determined, where each variable and function in the project code are deployed in a multi-tier storage system; and
mapping (103), according to the mapping relationship between the storage area identifier and storage space, each function and/or variable to the storage space.

2. The storage space mapping method according to claim 1, wherein the acquiring (102) a mapping relationship between the home file and a storage area identifier, and establishing, according to the mapping relationship, a mapping relationship between each function and/or variable and the storage area identifier specifically comprises:
parsing a configuration file, and establishing the mapping relationship between each function and/or variable and the storage area identifier according to the pre-created configuration file and the home file of each function and/or variable, wherein the configuration file comprises the mapping relationship between the home file and the storage area identifier.

3. The storage space mapping method according to claim 2, wherein the configuration file further comprises:
a mapping relationship between a specified function and/or variable in the home file and a storage area identifier, wherein a storage area identifier corresponding to the specified function and/or variable is different from a storage area identifier corresponding to the home file of the specified function and/or variable; and
correspondingly, the establishing the mapping relationship between each function and/or variable and the storage area identifier according to a pre-created configuration file and the home file of each function and/or variable specifically comprises:
establishing, according to the storage area identifier that is corresponding to the specified function and/or variable, the mapping relationship between the specified function and/or variable and the storage area identifier; and
establishing, according to the storage area identifier that is corresponding to the home file, a mapping relationship between each of another function and/or variable and the storage area identifier, wherein each of the another function and/or variable is a function and/or variable other than the specified function and/or variable in the home file.

4. The storage space mapping method according to claim 1, wherein the acquiring (102) a mapping relationship between the home file and a storage area identifier, and establishing, according to the mapping relationship, a mapping relationship between each function and/or variable and the storage area identifier specifically comprises:
detecting whether the source code carries a first rule that is used to indicate the mapping relationship between the home file and the storage area identifier; and
when the source code carries the first rule that is used to indicate the mapping relationship between the home file and the storage area identifier, establishing the mapping relationship between each function and/or variable and the storage area identifier according to the mapping relationship between the home file and the storage area identifier in the first rule.

5. The storage space mapping method according to claim 4, further comprising:
detecting, after the first rule is detected, whether the source code carries a second rule that is used to indicate a mapping relationship between a specified function and/or variable and a storage area identifier, wherein a storage area identifier corresponding to the specified function and/or variable in the second rule is different from a storage area identifier corresponding to the home file of the specified function and/or variable in the first rule; and
when the source code carries the second rule that is used to indicate a mapping relationship between a specified function and/or variable and a storage area identifier, establishing the mapping relationship between the specified function and/or variable and the storage area identifier according to the second rule, and establishing a mapping relationship between each of another function and/or variable and the storage area identifier according to the first rule, wherein each of the another function and/or variable is a function and/or variable other than the specified function and/or variable in the home file.

6. A storage space mapping apparatus implementing the method according to any one of the preceding claims.

## Patentansprüche

1. Speicherplatzabbildungsverfahren, umfassend:
Definieren von Speicherbereichskennungen, die verwendet werden, um einen Speicherplatz anzugeben, der zum Speichern einer Variablen oder einer Funktion auf einem L1-Speicherplatz oder einem L2-Speicherplatz verwendet wird;
Konfigurieren einer Speicherbereichskennung auf Dateiebene, d.h. Zuordnen einer Speicherbereichskennung zu jeder Datei, und Herstellen einer Abbildungsbeziehung zwischen der Datei und der Speicherbereichskennung;
Parsen (101) des Quellcodes, um eine Home-Datei jeder Funktion und/oder Variable im Quellcode zu erhalten, wobei der von einem Benutzer geschriebene Projekt-Quellcode gelesen wird, und durch morphologische und grammatikalische Analyse jede Funktion und Variable im Quellcode und ein Home-Datei-Pfad jeder Funktion oder Variable, d.h. eine Datei oder ein Ordner, zu dem jede Funktion oder Variable gehört, erfasst werden, und wobei, nachdem der Projekt-Quellcode gelesen wurde, mindestens zwei Quellcode-Dateien im Projekt-Quellcode erfasst werden;
Erfassen (102) der Abbildungsbeziehung zwischen der Home-Datei und der Speicherbereichskennung, die der Datei entspricht, zu der jede Funktion oder Variable gehört, und Herstellen einer Abbildungsbeziehung zwischen jeder Funktion und/oder Variable und der Speicherbereichskennung gemäß der Abbildungsbeziehung;
Kompilieren eines Codes, der eine Abbildungsbeziehung zwischen einer Funktion oder einer Variablen und einer Speicherbereichskennung in eine umleitbare Datei identifiziert, und Herstellen einer Abbildungsbeziehung zwischen einer Speicherbereichskennung und dem angegebenen Speicherplatz durch Modifizieren eines Link-Skripts;
Erzeugen einer Bilddatei durch Verknüpfen der umleitbaren Datei und des Link-Skripts miteinander, wobei in diesem Fall der Speicherplatz jeder Variablen und Funktion im Projektcode bestimmt wird, wobei jede Variable und Funktion im Projektcode in einem mehrschichtigen Speichersystem bereitgestellt wird; und
Abbilden (103) jeder Funktion und/oder Variable auf den Speicherplatz gemäß der Abbildungsbeziehung zwischen der Speicherbereichskennung und dem Speicherplatz.

2. Speicherplatzabbildungsverfahren nach Anspruch 1, wobei das Erfassen (102) einer Abbildungsbeziehung zwischen der Home-Datei und einer Speicherbereichskennung und das Herstellen einer Abbildungsbeziehung zwischen jeder Funktion und/oder Variable gemäß der Abbildungsbeziehung und der Speicherbereichskennung spezifisch umfasst:
Parsen einer Konfigurationsdatei und Herstellen der Abbildungsbeziehung zwischen jeder Funktion und/oder Variable und der Speicherbereichskennung gemäß der vorab erstellten Konfigurationsdatei und der Home-Datei jeder Funktion und/oder Variable, wobei die Konfigurationsdatei die Abbildungsbeziehung zwischen der Home-Datei und der Speicherbereichskennung umfasst.

3. Speicherplatzabbildungsverfahren nach Anspruch 2, wobei die Konfigurationsdatei ferner umfasst:
eine Abbildungsbeziehung zwischen einer spezifizierten Funktion und/oder Variable in der Home-Datei und einer Speicherbereichskennung, wobei sich eine Speicherbereichskennung, die der spezifizierten Funktion und/oder Variable entspricht, von einer Speicherbereichskennung unterscheidet, die der Home-Datei der spezifizierten Funktion und/oder Variable entspricht; und
dementsprechend umfasst das Herstellen der Abbildungsbeziehung zwischen jeder Funktion und/oder Variable und der Speicherbereichskennung gemäß einer vorab erstellten Konfigurationsdatei und der Home-Datei jeder Funktion und/oder Variable spezifisch:
Herstellen der Abbildungsbeziehung zwischen der spezifizierten Funktion und/oder Variable und der Speicherbereichskennung gemäß der Speicherbereichskennung, die der spezifizierten Funktion und/oder Variable entspricht; und
Herstellen einer Abbildungsbeziehung zwischen jeder einer anderen Funktion und/oder Variable und der Speicherbereichskennung gemäß der Speicherbereichskennung, die der Home-Datei entspricht, wobei jede der anderen Funktionen und/oder Variablen eine Funktion und/oder Variable ist, die von der angegebenen Funktion und/oder Variable in der Home-Datei verschieden ist.

4. Speicherplatzabbildungsverfahren nach Anspruch 1, wobei das Erfassen (102) einer Abbildungsbeziehung zwischen der Home-Datei und einer Speicherbereichskennung und das Herstellen einer Abbildungsbeziehung zwischen jeder Funktion und/oder Variable gemäß der Abbildungsbeziehung und der Speicherbereichskennung spezifisch umfasst:
Erkennen, ob der Quellcode eine erste Regel trägt, die verwendet wird, um die Abbildungsbeziehung zwischen der Home-Datei und der Speicherbereichskennung anzugeben; und
wenn der Quellcode die erste Regel trägt, die verwendet wird, um die Abbildungsbeziehung zwischen der Home-Datei und der Speicherbereichskennung anzugeben, Herstellen der Abbildungsbeziehung zwischen jeder Funktion und/oder Variablen und der Speicherbereichskennung gemäß der Abbildungsbeziehung zwischen der Home-Datei und der Speicherbereichskennung in der ersten Regel.

5. Speicherplatzabbildungsverfahren nach Anspruch 4, ferner umfassend:
Erkennen, nachdem die erste Regel erkannt wurde, ob der Quellcode eine zweite Regel trägt, die verwendet wird, um eine Abbildungsbeziehung zwischen einer spezifizierten Funktion und/oder Variablen und einer Speicherbereichskennung anzugeben, wobei sich eine Speicherbereichskennung, die der spezifizierten Funktion und/oder Variablen in der zweiten Regel entspricht, von einer Speicherbereichskennung unterscheidet, die der Home-Datei der spezifizierten Funktion und/oder Variable in der ersten Regel entspricht; und
wenn der Quellcode die zweite Regel trägt, die verwendet wird, um eine Abbildungsbeziehung zwischen einer bestimmten Funktion und/oder Variablen und einer Speicherbereichskennung anzugeben, Herstellen der Abbildungsbeziehung zwischen der spezifizierten Funktion und/oder Variablen und der Speicherbereichskennung gemäß der zweiten Regel und Herstellen einer Abbildungsbeziehung zwischen jeder anderen Funktion und/oder Variablen und der Speicherbereichskennung gemäß der ersten Regel, wobei jede der anderen Funktionen und/oder Variablen eine Funktion und/oder Variable ist, die von der spezifizierten Funktion und/oder Variablen in der Home-Datei verschieden ist.

6. Speicherplatzabbildungsvorrichtung, die das Verfahren gemäß einem der vorhergehenden Ansprüche implementiert.

## Revendications

1. Procédé de mappage d'espace de stockage, comprenant de :
définir des identificateurs de zone de stockage utilisés pour indiquer l'espace de stockage qui est utilisé pour stocker une variable ou une fonction au niveau d'un espace de stockage L1 ou d'un espace de stockage L2 ;
configurer un identificateur de zone de stockage à un niveau fichier, à savoir, allouer un identificateur de zone de stockage à chaque fichier, et établir une relation de mappage entre le fichier et l'identificateur de zone de stockage ;
analyser (101) le code source, de façon à acquérir un fichier d'origine de chaque fonction et/ou variable dans le code source, dans lequel le code source de projet écrit par un utilisateur est lu, et par analyse morphologique et grammaticale, chaque fonction et variable dans le code source, et un chemin de fichier d'origine de chaque fonction ou variable, à savoir, un fichier ou un dossier auquel chaque fonction ou variable appartient, sont acquis, et dans lequel, après que le code source de projet a été lu, au moins deux fichiers de code source dans le code source de projet sont acquis ;
acquérir (102) la relation de mappage entre le fichier d'origine et l'identificateur de zone de stockage correspondant au fichier auquel appartient chaque fonction ou variable, et établir, en fonction de la relation de mappage, une relation de mappage entre chaque fonction et/ou variable et l'identificateur de zone de stockage ;
compiler le code qui identifie une relation de mappage entre une fonction ou une variable et un identificateur de zone de stockage dans un fichier qui peut être redirigé, et établir une relation de mappage entre un identificateur de zone de stockage et l'espace de stockage spécifié en modifiant un script de liaison ;
générer un fichier image en liant le fichier qui peut être redirigé et le script de liaison ensemble, dans lequel, dans ce cas, l'espace de stockage de chaque variable et fonction dans le code de projet est déterminé, où chaque variable et fonction dans le code de projet est déployée dans un système de stockage multi-niveaux ; et
mapper (103), en fonction de la relation de mappage entre l'identificateur de zone de stockage et l'espace de stockage, chaque fonction et/ou variable dans l'espace de stockage.

2. Procédé de mappage d'espace de stockage selon la revendication 1, dans lequel l'acquisition (102) d'une relation de mappage entre le fichier d'origine et un identificateur de zone de stockage, et l'établissement, en fonction de la relation de mappage, d'une relation de mappage entre chaque fonction et/ou variable et l'identificateur de zone de stockage comprend spécifiquement de :
analyser un fichier de configuration, et établir la relation de mappage entre chaque fonction et/ou variable et l'identificateur de zone de stockage en fonction du fichier de configuration pré-créé et du fichier d'origine de chaque fonction et/ou variable, dans lequel le fichier de configuration comprend la relation de mappage entre le fichier d'origine et l'identificateur de zone de stockage.

3. Procédé de mappage d'espace de stockage selon la revendication 2, dans lequel le fichier de configuration comprend en outre :
une relation de mappage entre une fonction et/ou variable spécifiée dans le fichier d'origine et un identificateur de zone de stockage, dans lequel un identificateur de zone de stockage correspondant à la fonction et/ou variable spécifiée est différent d'un identificateur de zone de stockage correspondant au fichier d'origine de la fonction et/ou variable spécifiée ; et
en conséquence, l'établissement de la relation de mappage entre chaque fonction et/ou variable et l'identificateur de zone de stockage en fonction d'un fichier de configuration pré-créé et du fichier d'origine de chaque fonction et/ou variable comprend spécifiquement de :
établir, en fonction de l'identificateur de zone de stockage qui correspond à la fonction et/ou variable spécifiée, la relation de mappage entre la fonction et/ou variable spécifiée et l'identificateur de zone de stockage ; et
établir, en fonction de l'identificateur de zone de stockage qui correspond au fichier d'origine, une relation de mappage entre chacune d'une autre fonction et/ou variable et l'identificateur de zone de stockage, dans lequel chacune de l'autre fonction et/ou variable est une fonction et/ou variable autre que la fonction et/ou variable spécifiée dans le fichier d'origine.

4. Procédé de mappage d'espace de stockage selon la revendication 1, dans lequel l'acquisition (102) d'une relation de mappage entre le fichier d'origine et un identificateur de zone de stockage, et l'établissement, en fonction de la relation de mappage, d'une relation de mappage entre chaque fonction et/ou variable et l'identificateur de zone de stockage comprend spécifiquement de :
détecter si le code source comporte une première règle qui est utilisée pour indiquer la relation de mappage entre le fichier d'origine et l'identificateur de zone de stockage ; et
lorsque le code source comporte la première règle qui est utilisée pour indiquer la relation de mappage entre le fichier d'origine et l'identificateur de zone de stockage, établir la relation de mappage entre chaque fonction et/ou variable et l'identificateur de zone de stockage en fonction de la relation de mappage entre le fichier d'origine et l'identificateur de zone de stockage dans la première règle.

5. Procédé de mappage d'espace de stockage selon la revendication 4, comprenant en outre de :
détecter, après que la première règle a été détectée, si le code source comporte une seconde règle qui est utilisée pour indiquer une relation de mappage entre une fonction et/ou variable spécifiée et un identificateur de zone de stockage, dans lequel un identificateur de zone de stockage correspondant à la fonction et/ou variable spécifiée dans la seconde règle est différent d'un identificateur de zone de stockage correspondant au fichier d'origine de la fonction et/ou variable spécifiée dans la première règle ; et
lorsque le code source comporte la seconde règle qui est utilisée pour indiquer une relation de mappage entre une fonction et/ou variable spécifiée et un identificateur de zone de stockage, établir la relation de mappage entre la fonction et/ou variable spécifiée et l'identificateur de zone de stockage en fonction de la seconde règle, et établir une relation de mappage entre chacune d'une autre fonction et/ou variable et l'identificateur de zone de stockage selon la première règle, dans lequel chacune de l'autre fonction et/ou variable est une fonction et/ou variable autre que la fonction et/ou variable spécifiée dans le fichier d'origine.

6. Appareil de mappage d'espace de stockage mettant en œuvre le procédé selon l'une quelconque des revendications précédentes.
